Europäisches Patentamt

European Patent Office

Office européen des brevets

(11) Publication number: **0 409 419 A2**

# EUROPEAN PATENT APPLICATION

(21) Application number: 90306904.5

(51) Int. Cl.⁵: **F16B 33/06**, //C09J4/00

(22) Date of filing: 25.06.90

(30) Priority: 19.07.89 US 382095

(43) Date of publication of application:
23.01.91 Bulletin 91/04

(84) Designated Contracting States:
DE FR GB IT SE

(71) Applicant: ACHESON INDUSTRIES, INC.,
315 Peoples Bank Building 511 Fort Street, P
O Box 610489
Port Huron Michigan 48061-0489(US)

(72) Inventor: Morgans, David Evan Bryan

4282 Quaker Hill Drive
Ourt Huron, Michigan 48060(US)
Inventor: Hoffman, William Eric
5909 Lakenshore Road
Port Huron, Michigan 48060(US)
Inventor: Lewandowski, Mark Allan
3175 North Range Road
Port Huron, Michigan 48060(US)

(74) Representative: Williams, Trevor John et al
J.A. KEMP & CO. 14 South Square Gray's
InnInn
London WC1R 5LX(GB)

(54) Threaded fastener product with adhesive coating.

(57) A solventless adhesive coating composition and a threaded fastener product utilising such coating. The coating consists of 13 to 60% by weight of resin oligomer having a molecular weight from about 1000 to about 8000, about 40 to 80% by weight of monomer diluent, having a molecular weight from 75 to 700, $\frac{1}{2}$ % to 15% by weight of a photoiniator agent to enable the coating to be initially cured onto the fastener and 0 to about 25% by weight of a tackifier agent. The adhesive coating on the fastener is a non-tacky partially UV cured solventless adhesive.

EP 0 409 419 A2

## THREADED FASTENER PRODUCT WITH ADHESIVE COATING

### BACKGROUND OF THE INVENTION

The present invention broadly relates to new adhesive coated fasteners and novel adhesive coatings there for. More specifically the invention relates to a threaded fastener with a new non-tacky solventless adhesive coating on the fastener.

Various techniques have been disclosed in the Patent literature regarding the manufacture of fasteners with adhesive coatings applied thereto. The following Cited References are listed to show the state of the art:

U.S.Patent No. 2,929,446 (James et. al.)
U.S.Patent No. 2,989,107 (James et. al.)
U.S.Patent No. 3,022,197 (Jedlicka)
U.S.Patent No. 3,642,937 (Deckert et. al.)
U.S.Patent No. 3,711,347 (Wagner et. al.)
U.S.Patent No. 3,746,068 (Decker et. al.)
U.S.Patent No. 3,987,019 (Gruber et. al.)
U.S.Patent No. 3,437,541 (Cooper et. al.)
U.S.Patent No. 3,897,713 (Gugle)
U.S.Patent No. 4,428,982 (Wallace)
U.S.Patent No. 4,545,712 (Wallace)
U.S.Patent No. 4,657,460 (Bien)
U.S.Patent No. 4,417,028 (Azevedo)
U.S.Patent No. 4,325,985 (Wallace)
U.S.Patent No. 4,632,944 (Thompson)
U.S.Patent No. 4,164,971 (Strand)

In the past there has been a problem in the automotive industry which exists when two sheets of plastic, or one sheet of plastic and one of metal, are fastened together with screws or threaded fasteners. When the screws are tightened initially, all appears to be well, however since the plastic materials used have a tendency to creep, there may be cold flow in the stressed area of the plastic, resulting in gradual loss of clamping pressure originally brought about by the fastener. In practice this gives rise to annoying buzzing or rattling noises sometime after the automobile has been assembled. Previous attempts to solve this problem by coating the screws or fasteners with an adhesive coating, to provide additional clamping force, and for the purpose of attempting to prevent rattling or buzzing noises have failed. This was because in the past solvent-based adhesives had been attempted for this purpose, and the solvents attack the plastic workpieces which were being fastened together.

Accordingly it is a primary object of this invention to provide a new fastener system wherein the fastener product contains an adhesive coating composition of a unique nature.

Another object of the present invention is to provide a new fastener product with an adhesive coating thereon wherein the adhesive coating is subjected to initial curing by ultraviolet light.

Another object of the invention is to provide a new adhesive coating composition.

Another object of the present invention is to provide a new fastening technique which utilizes a solventless heat tackified adhesive.

Another object of the present invention is to provide a new fastener product having an adhesive coating thereon which will not interfere with or attack the composition of the workpieces which are being secured, and which will not cause corrosion of the workpieces.

Another object of the present invention is to provide a new fastener product having an adhesive coating thereon which enables increased vibration resistant properties for the fastener system after installation of same.

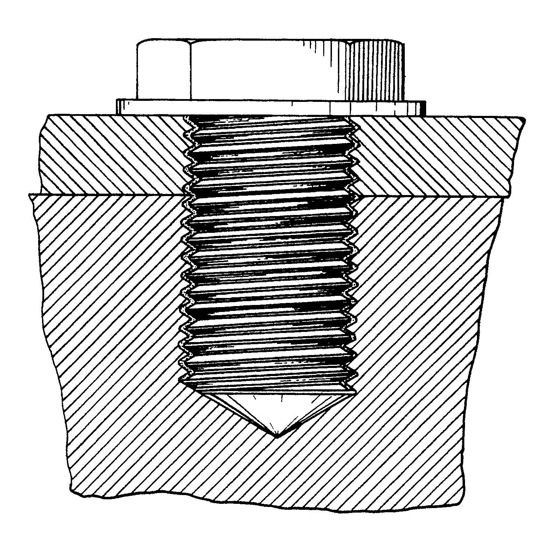

Other objects, features and advantages of the present invention will become apparent from the subsequent description and the appended claims taken in conjunction with the accompanying drawing.

### BRIEF DESCRIPTION OF THE DRAWING

The drawing figure is a sectional view of a fastener and workpieces to illustrate the invention herein.

## SUMMARY OF THE INVENTION

The present invention may be practiced with either metal or plastic type workpieces; and also, either metal or plastic fasteners may be used in the invention, e.g., such as sheet metal screws or plastic threaded fasteners or other similar fasteners. It has unexpectedly been determined that the present invention is particularly useful when the fastener is used with one or more plastic workpieces which are being fastened together. More specifically, it has been determined that a fastener with an adhesive coating thereon within the scope of the present invention does not attack plastic or metal workpieces.

It is not fully understood why the present invention brings about such markedly good results. However, in accordance with the invention the fasteners are first coated with a unique adhesive coating composition, as will be described herein; and, after the coating of adhesive has been applied, the coating is subjected to an ultraviolet (UV) curing step which renders the adhesive coating on the fasteners into a non-tacky condition. Subsequently however when the fastener is driven into the workpieces, to hold the workpieces together, the heat of friction produced in the driving of the fastener appears to render the adhesive coating into somewhat of a thermoplastic condition which makes the adhesive tacky during and shortly after the driving application of the fastener.

It has also been discovered that when the adhesive coating initially applied to the fastener is overcured by the application of ultraviolet light, or other suitable radiation, that the coating then loses its tackiness. This renders the fasteners non-sticky and suitable for shipment in commerce without sticking together; however, the tackiness is restored upon the application of the frictional heat generated during the driving of the fastener. This causes very secure and permanent clamping forces in the final fastener installation. All of this occurs without the usage of microencapsulated materials within the adhesive coating, and without the necessity of added liquids or solvents during the application or usage of the fasteners.

Briefly stated, the present invention comprises a fastener system for securing at least two workpieces to one another, and including a fastener which is driven into position to secure the workpieces, with the improvement comprising: a fastener, an adhesive coating on said fastener, said adhesive coating consisting essentially of, about 13% to about 60% by weight of resin oligomer having a molecular weight from about 1000 to about 8000, about 40% to about 87% by weight of monomer diluent having a molecular weight from about 75 to about 700, about 1/2% to about 15% by weight of a photoiniator agent which enables the coating to be initially cured onto the fastener, and zero to about 25% by weight of a tackifier agent, said coating being operative to produce additional tackiness from frictional heat generated when the fastener is driven in to position.

In another aspect, briefly stated, the invention comprises a novel adhesive coating composition, particularly suitable for use on threaded fasteners for automobiles, appliances, or the like, said composition consisting essentially of, about 13% to about 60% by weight of resin oligomer having a molecular weight from about 1000 to about 8000, about 40% to about 87% by weight of monomer diluent, about 1/2% to about 15% by weight of photoiniator agent, and zero to about 11% by weight of tackifier agent. Another unique feature and technical advantage of the adhesive coating composition is that the degree of tackiness of the adhesive composition can be controlled in a predetermined manner by the amount of UV radiation which is applied to the composition.

## DESCRIPTION OF PREFERRED EMBODIMENTS

A fastener with adhesive coating thereon, within the scope of the present invention, is shown in the drawing figure. The drawing illustrates a threaded fastener 10 with an adhesive coating 12 thereon. The fastener is shown in clamped position holding or clamping two workpieces 14 and 16 into a tightly secured together position.

The fastener 10 has its adhesive coating 12 applied thereto by coating processes such as dipping, spraying or the like. The excess coating is removed from the fastener, for example by centripetal force, or in any other similar workable fashion for removing excess coating. After the excess adhesive coating has been removed, the fasteners with the adhesive coating thereon are eased to ultraviolet light for curing the adhesive coating onto the fasteners. When the coating is cured on the fastener it is thereafter non-tacky until the fastener itself is ready for actual usage in the fastening or securement of the workpieces.

The components of the adhesive coating composition are a high molecular weight resin, an acrylated monomer diluent, a photoinitiator agent, and a tackifier agent.

The high molecular weight resin material should be present in the adhesive composition within the broad range of approximately 13% to about 60% by weight, and preferably within the range of about 15%

3

to about 55% by weight. The high molecular weight resin should have a molecular weight within the range of about 1,000 to about 8,000, and preferably within the range of about 2,500 to about 5,000. The high molecular weight resin can be selected from any one or more of the group of an acrylated urethane oligimor, and epoxy oligimor, a polyether oligimor, or a polyester oligimor. The preferred high molecular weight resin is an acrylated urethane oligimor.

The monomer diluent used in the adhesive coating composition should broadly be within the range of about 40% to about 87% by weight, and preferably within the range of about 45% to about 85% by weight. The monomer diluent should have a molecular weight within the range of about 75 to about 700, and preferably within the range of about 80 to about 400. The monomer diluent should preferably be an acrylated monomer diluent. Particularly suitable monomer diluents for use in the invention are those selected from one or more of the group consisting of: isobornyl acrylate,

beta-carboxyethyl acrylate,

tetrahydro fufuryl acrylate,

isodecyl acrylate,

glyceryl propoxy triacrylate,

octyl/decyl acrylate

trimethylol propane triacrylate, and

acrylic acid.

The photoinitiator agent used in the adhesive coating composition should broadly be within the range of about 1/2% to about 15% by weight of the composition, and preferably within the range of about 2% to about 10% by weight. It will be understood that the radiation used to initially cure the adhesive coating on the fasteners will normally be ultraviolet (UV) radiation, however, other types of radiation may be used and the invention should not be unnecessarily limited just to UV radiation. Typically suitable photoinitiator agents which can be used in the invention are:

Diethoxy acetophenone,

alpha,alpha,-dimethyl-alpha-hydroxy acetophenone

alpha,alpha,-dimethoxy-alpha-phenyl acetophenone, and

Benzophenone.

The tackifier agent used in the invention should be present within the range of zero up to about 25% by weight of the composition. Preferably however the tackifier agent should be present at least in the amount of about 0.001% up to about 11% by weight of the composition. The best results have been obtained when the tackifier agent is present within the range of about 0.1% to about 8% by weight of the composition. The tackifier agent suitable for use in the invention can be described as a thermoplastic acidic rosin derivative. Particularly suitable tackifier or tackifying agents are Acryloid B-66, Foral 105, and Sylvatac 25N.

Other additive ingredients may also optionally be used in the adhesive coating composition on the fasteners in accordance with this invention; and such other additive ingredients which may optionally be used are flow agents, defoaming agents, vetting agents; and/or UV dyes or coloring pigments, which enable the coated fastener(or other coated product or adhesive composition) to be color coded for ease of identification. By the term solventless as used herein it is meant that the composition is substantially free of any solvent and that it does not require any solvent; however in the essence of protecting the spirit and proper scope of the invention it should be understood that another party attempting to practice the spirit of the invention herein should not be permitted to avoid the inventive scope through the use of minor amounts of some solvent.

In order to further illustrate the invention the following examples are provided. It is to be understood however that the examples are included for illustrative purposes and are not intended to be limiting of the scope of the invention as set forth in the subjoined claims. In the examples "PBW" means parts by weight.

| EXAMPLE 1 | |
|---|---|
| Material | PBW |
| Isobornyl Acrylate (acrylated monomer diluent) | 37.00 |
| Foral 105 (tackifier, thermoplastic acidic rosin derivative) | 18.40[Hercules Co.] |
| Sylvatac 25N (tackifier, thermoplastic acidic rosin derivative) | 3.60[Sylvachem Corp.] |
| Purelast 166 (acrylated urethane oligomer) | 36.80[Polymer Science Co.] |
| Silwet L-722 (flow agent and defoaming agent) | 0.03[Union Carbide Co.] |
| Polybutadiene[Ionex 401] (flow agent and defoaming agent) | 0.30[Special Electric Co.] |
| Byk 052 (flow agent) | 0.03[Byk Co.] |
| SP-PP (flow agent) | 0.04[Nazdar K.C.] |
| Diethoxyacetophenone (photoiniator) | 0.35 |
| alpha,alpha,-dimethyl-alpha-hydroxy acetophenone (photoiniator) | 0.86 |
| alpha,alpha,-dimethoxy-alpha-phenyl acetophenone (photoiniator) | 1.55 |
| Benzophenone (photoiniator) | 1.04 |
| | 100.00 |

[Blend on low speed mixer. Mix in order shown above. Do not exceed 125 degree F.; Ex's 2 to 6 hereafter use the same general blending procedure].

| EXAMPLE 2 | |
|---|---|
| | PBW |
| Purelast 169 AV (acrylated urethane oligomer) [Polymer Science Co.] | 52.90 |
| Octyl/decyl acetate (acrylated monomer diluent) | 17.80 |
| Acryloid B-66 (tackifier agent) [Rohm & Haas Co.] | 7.70 |
| Tetrahydrofufuryl acrylate (acrylated monomer diluent) | 12.10 |
| Photoinitiator comp. of Ex. 7 | 2.00 |

| EXAMPLE 3 | |
|---|---|
| | PBW |
| Formula 2 | 90.00 |
| Isodecyl acrylate (acrylated monomer diluent) | 10.00 |

| EXAMPLE 4 | |
|---|---|
| | PBW |
| Formula 2 | 73.00 |
| Glyceryl propoxy triacrylate (acrylated monomer diluent) | 27.00 |

5

| EXAMPLE 5 | |
|---|---|
| | PBW |
| Purelast 169 AV (high M.W. urethane oligomer) [Polymer Science Co.] | 20.40 |
| Octyl/decyl acrylate (monomer diluent) | 40.20 |
| Acryloid B-66 (tackifier agent) | 17.40 |
| Glyceryl propoxy triacrylate (monomer diluent) | 16.90 |
| Photoinitiator comp. of Ex. 7 | 5.10 |

| EXAMPLE 6 | |
|---|---|
| | PBW |
| Purelast 166 (high M.W. urethane oligomer) [Polymer Science Co.] | 20.00 |
| trimethyolpropane triacrylate (acrylated monomer diluent) | 24.00 |
| Octyl/decyl acrylate (acrylated monomer diluent) | 16.00 |
| Acryloid B-66 (tackifier) | 7.00 |
| Acrylic acid (acrylated monomer diluent) | 13.00 |
| alpha,alpha,-dimethyl-alpha-hydroxy acetophenone (photoiniator agent) | 7.00 |
| Isobornyl acrylate | 13.00 |

| EXAMPLE 7(photoiniator/formula) | |
|---|---|
| | PBW |
| Diethoxyacetophenone | 9.10 |
| alpha,alpha,-dimethyl-alpha-hydroxy acetophenone | 22.70 |
| alpha,alpha,-dimethoxy-alpha-phenyl acetophenone | 40.90 |
| Benzophenone | 27.30 |
| | 100.00 |

The process of applying the adhesive coating to the fasteners and the initial curing of the coating on the fasteners is as follows. The adhesive coating is applied in a spin coating apparatus, or by dipping or spraying. After the coating is applied the excess coating is drained off of the fasteners through any suitable means. Normally the coating thickness applied is, broadly stated, within the range of about 1.2 microns up to about 25 microns thickness. Preferably the coating thickness is about 2 to about 5 microns thick. Following application of the coating to the fasteners, the fasteners or screws are then put on a reflective tray which is placed on a conveyer belt. The fasteners on the tray are spread out such that they are uniformly distributed on the tray; and, the fasteners are then passed under a 300 watts per inch medium pressure mercury bulb(for the application of UV radiation) such that one joule per square centimeter of UV radiation is applied to the fasteners to initially UV cure the coating on to the fasteners.

While it will be apparent that the preferred embodiments of the invention are well calculated to fulfill the objects, benefits and/or advantages of the invention, it will appreciated that the invention is susceptible to modification, variation and change without departing from the proper scope or fair meaning of the subjoined claims.

## Claims

1. In a fastener system for securing at least two workpieces to one another, and including a fastener which is driven into position to secure the workpieces, the improvement comprising:
a fastener,

6

an adhesive coating on said fastener, said adhesive coating consisting essentially of, about 13% to about 60% by weight of resin oligomer having a molecular weight from about 1000 to about 8000, about 40% to about 87% by weight of monomer diluent having a molecular weight from about 75 to about 700, about 1/2 to about 15% by weight of a photoiniator agent which enables the coating to be initially UV cured on to the fastener, and zero to about 25% by weight of a tackifier agent,
said coating being operative to produce additional tackiness from frictional heat generated when the fastener is driven in to position.

2. The invention of claim 1 wherein,
said resin oligomer has a molecular weight from about 2500 to about 5500,
said monomer diluent has a molecular weight from about 80 to about 400,
said tackifier agent is present from about 0.001 to about 11% by weight.

3. An adhesive coating composition, particularly suitable for use on threaded fasteners for automobiles, appliances or the like, said composition consisting essentially of about 13 to about 60% by weight of resin oligomer having a molecular weight from about 1000 to about 8000, about 40% to about 87% by weight of monomer diluent, about $\frac{1}{2}$ % to about 15% by weight of photoininiator agent, and 0 to about 11% by weight of takifier agent.

4. The invention of claim 8, wherein said resin oligomer has a molecular weight from about 2500 to about 5500, said tackifier agent is present from about 0.001 to about 11% by weight.

5. The invention of any preceding claim, wherein said resin oligomer is present from about 15% to about 55%, said monomer diluent is present from about 45% to about 85%, said photoiniator agent is present from about 2% to about 10%, said tackifier agent is present from about 0.001% to about 11%.

6. The invention of claim 5, wherein said tackifier agent is present from about 0.1% to about 8% by weight.

7. The invention of any preceding claim, wherein said oligomer is selected from at least one of the group consisting of an acrylated urethane oligomer, an epoxy oligomer, a polyether oligomer or a polyester oligomer, said diluent is an acrylated monomer diluent.

8. The invention of any one of claims 1 to 6, wherein said oligomer is an acrylated urethane oligomer, said diluent is an acrylated monomer diluent.

9. The invention of any one of claims 1 to 6, wherein said oligomer is an acrylated urethane oligomer, said diluent is an acrylated monomer diluent, selected from at least one of the group consisting of isobornyl acrylate, β-carboxyethyl acrylate, tetrahydro fufuryl acrylate, isodecyl acrylate, glyceryl propoxy triacrylate, octyl/decyl acrylate, trimethylol propane triacrylate and acrylic acid.